# EUROPEAN PATENT SPECIFICATION

(11) **EP 3 272 663 B1**
(45) Date of publication and mention of the grant of the patent: **24.11.2021**
(21) Application number: 16305947.0
(22) Date of filing: 22.07.2016
(51) Int. Cl.: B65C 9/22

(54) **A LABELING APPARATUS FOR LABELING RECEPTACLES AND A METHOD FOR OPERATING SUCH A LABELING APPARATUS**
ETIKETTIERVORRICHTUNG ZUM ETIKETTIEREN VON BEHÄLTERN UND VERFAHREN ZUM BETRIEB SOLCH EINER ETIKETTIERVORRICHTUNG
APPAREIL D'ÉTIQUETAGE POUR ÉTIQUETER DES RÉCIPIENTS ET PROCÉDÉ POUR FAIRE FONCTIONNER UN TEL APPAREIL D'ÉTIQUETAGE

(43) Date of publication of application: 24.01.2018
(73) Proprietor: SIDEL PARTICIPATIONS, 76930 Octeville-sur-Mer (FR)
(72) Inventor: PIAZZA, Gastone, 43126 Parma (IT); ANDREATO, Cristian, 43126 Parma (IT); CARMICHAEL, James, 43126 Parma (IT); PACE, Raffaele, 43126 Parma (IT)
(74) Representative: Sidel Group

(56) References cited:
- EP-A1- 2 567 902
- EP-A1- 2 818 424
- EP-A1- 3 072 824
- WO-A1-2009/106128
- DD-A5- 296 255

## Description

### TECHNICAL FIELD

The present invention relates to a labeling apparatus for labeling articles and a method of operating such a labeling apparatus Z according to the preamble of claims 1 and 9, respectively, and as known from EP-A-2818424 . In particular, the present invention relates to a labeling apparatus for labeling receptacles, such as bottles, containers and the like.

### BACKGROUND ART

The packaging of food or non-food products into respective articles, in particular receptacles, containers, bottles , etc. , comes along with a labeling of the receptacles with respective label sheets during a labeling process. Typically, the label sheets serve e.g. to transmit the respective brand of the packaged product and, thus, to draw the attention of final customers once the product has been delivered to and exposed in store houses. Additionally, each label sheet provides the customer with important information about the stored product. The overall appearance of the label sheet applied on a respective article is of significant importance. Thus, the quality of the labeling process itself must guarantee a correct, repeatable and clean attachment of the label. Otherwise, a significant number of articles are discarded due to an unsatisfactory appearance of the applied label leading to increasing production costs.

Labeling apparatuses for automatically attaching labels onto articles of all sort, such as receptacles, containers, vessels, bottles etc., are well known in the art and their use is widespread in the packaging industry.

One typical label type is the so called "self-stick label", which is directly wrapped around at least part of the respective article and glued thereto.

In general, in the known labeling apparatuses, prior to the application of the labels onto the respective articles, the labels are commonly conveyed by means of a transfer drum.

As known, in a labeling apparatus of the "self-stick label" type, which the following description will refer to without any limitative scope, each label of a succession of labels is attached onto the outer surface of one respective article. Prior to the application of the label onto the respective article glue is supplied onto the back surface of the label itself.

In these apparatuses, the articles are typically carried by a conveying carrousel along an article path so as to advance towards an application station at which one respective label is stuck onto each article. At the same time, in the known labeling apparatuses, a web of labeling material is fed from a roll-feeding unit towards a transfer drum.

In particular, the web of labeling material is advanced towards an outer lateral surface of the transfer drum. During feeding, the web of labeling material is brought into contact with a cutter of a cutting unit so as to cut the web of labeling material into labels of defined and appropriate lengths. Then each label is retained on the outer lateral surface of the transfer drum and is conveyed, by rotation of the transfer drum around its axis towards the application station.

In particular, during transfer towards the application station, the labels are retained by respective label retaining segments of the outer lateral surface of the transfer drum. These label retaining segments are equally spaced angularly around the axis of the transfer drum and have respective retaining sections which retain the label typically by means of suction and respective transition sections, along which labels fed from the roll-feeding unit slide prior to reaching the respective retaining sections. Additionally, the label retaining segments comprise a pair of pads protruding from the transfer drum, each one adapted to interact with a leading edge or a trailing edge of the labels and defining the retaining and transition sections.

Furthermore, prior to reaching the application station, each label interacts at a glue application station with a glue application unit which applies a pattern of glue onto the backside of the label so that the label can be stuck onto one respective article.

One commonly type of glue application unit comprises a rotating glue application roller tangentially cooperating with the transfer drum and adapted to contact the labels advanced by the transfer drum at the glue application station. Thereby, glue is transferred from the outer lateral surface of the glue application roller to the label. In particular, glue is transferred to the leading and trailing edges of the labels as, in use, the glue application roller contacts the labels solely at the position of the pads protruding from the outer lateral surface of the transfer drum.

Typically, during use of the labeling apparatuses, the transfer drum becomes contaminated, in particular due to airborne particles of the glue attaching to the label retaining segments. Concurrently, with time, this leads to a reduction of the overall quality of the labeling process which is tolerable only up to defined limits. In particular, the presence of contaminations on the label retaining segments leads to friction and drag effects causing distortion and breakage of some or even all labels. Thus, at some point during the labeling process the labeling process needs to be interrupted in order to typically manually clean the transfer drum by an operator. Typically, the labeling process must be interrupted every 20 to 30 minutes for a time range between two to five minutes for carrying out the needed cleaning of the transfer drum.

Improved means of cleaning such a transfer drum are disclosed in EP-A-2818424 in which the labeling apparatus further comprises a cleaning roller arranged peripherally adjacent to the transfer drum. The cleaning roller can move between an operative configuration at which the cleaning roller establishes a mechanical contact with the outer surface of the transfer drum for cleaning the outer surface and a rest position at which the cleaning roller is detached from the outer surface. During labeling the cleaning roller is controlled into its rest position so as not to interfere with the labeling process. When the labeling process needs to be interrupted for subjecting the transfer drum to a cleaning cycle the cleaning roller is controlled into the operative position so as to clean the outer surface by mechanical action of the cleaning roller.

Even though the labeling apparatus having a cleaning roller as disclosed in EP-A-2818424 provides for an improved efficiency with respect to the common approaches, still, the need is felt to further improve the cleaning of the transfer drum. In particular, the need is felt to further improve the operation of the labeling apparatus by further reducing the downtimes coming along with the required cleaning of the transfer drum.

EP-A-3072824 is published on 28.09.2016 and claims the priority date of 23.03.2015 and is therefore state of the art pursuant to Article 54(3) EPC. The document shows a labeling apparatus for labeling articles comprising:
- a transfer drum comprising at least one label retaining segment adapted to receive and to retain at least one label and the transfer drum being adapted to convey the at least one label along a path defined by rotation of the transfer drum around a central axis of the transfer drum itself;
- a glue application unit adapted to apply glue onto the label at a glue application station and, in particular the glue application unit being arranged adjacent to the transfer drum at the glue application station; and
- a cleaning unit adapted to clean the transfer drum;
- a control unit being adapted to selectively activate the cleaning unit into at least any one of:
- a partial cleaning configuration at which the cleaning unit is configured to partially clean the label retaining segment; and
- a full cleaning configuration at which the cleaning unit is configured to fully clean the label retaining segment, wherein the label retaining segment comprises a retaining section adapted to retain the label and a transition section adapted to receive the label and to slidingly guide the label to the retaining section; wherein in the partial cleaning configuration of the cleaning unit is configured to clean the transition section and wherein in the full cleaning configuration the cleaning unit is configured to clean the retaining section and the transition section.

### DISCLOSURE OF INVENTION

It is therefore an object of the present invention to provide a labeling apparatus and a method to operate a labeling apparatus to further improving the operation of such a labeling apparatus, in particular for improving the cleaning of the labeling apparatus.

It is a further object of the present invention to provide a labeling apparatus and a method of operating such a labeling apparatus to reduce the production downtimes due to the cleaning of the labeling apparatus.

According to the present invention, there is provided a labeling apparatus as claimed in claim 1.

Furthermore, according to the present invention, there is provided a method of operating a labeling apparatus as claimed in claim 9.

### BRIEF DESCRIPTION OF THE DRAWINGS

Two non-limiting embodiments of the present invention will be described by way of example with reference to the accompanying drawings, in which:
Figure 1 is a schematic top view of a labeling apparatus, with parts removed for clarity;
Figure 2 is a perspective top-side view of a detail of Figure 1, with parts removed for clarity;
Figure 3 is a perspective side view of the same detail of Figure 1 as shown in Figure 2, with parts removed for clarity; and
Figure 4 is a side view of a detail of a further embodiment of the labeling apparatus of Figure 1, with parts removed for clarity.

### BEST MODES FOR CARRYING OUT THE INVENTION

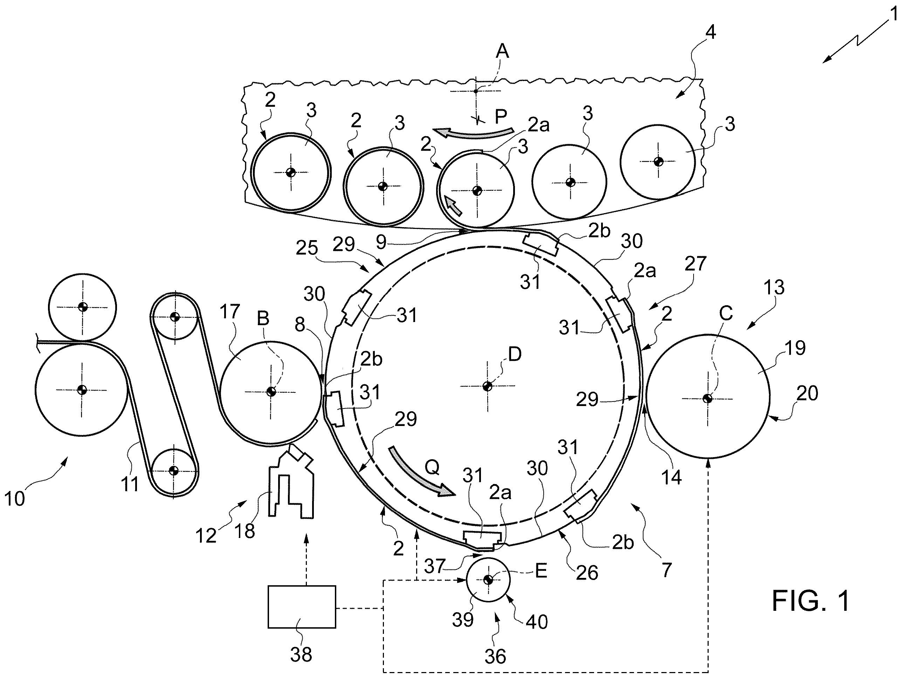

Number 1 in Figure 1 indicates as a whole a labeling apparatus only partially shown to the extent that is necessary for the comprehension of the present invention.

Apparatus 1 is adapted to be used for handling, transferring and applying labels 2 to respective articles 3 or, more specifically, receptacles, bottles, containers or the like as said articles 3 are advanced along an article path P. Advantageously, articles 3 are adapted to receive pourable products, in particular pourable food products such as such as carbonated liquids (e.g. sparkling water, soft drinks and beer), non-carbonated liquids (including still water, juices, teas, sport drinks, liquid cleaners, wine, etc), emulsions, suspensions, high viscosity liquids and beverages containing pulps.

In more detail, apparatus 1 comprises a carrousel 4 configured to support a plurality of articles 3 on its periphery and to rotate the same along path P around an axis A of carrousel 4 itself. In particular, carrousel 4 is configured to receive unlabelled articles 3 from a first handling machine (not shown and known as such) and to deliver labeled articles 3 to a second handling machine (not shown and known as such). I.e. the first handling machine is configured to feed articles 3, in particular unlabeled articles 3 to apparatus 1 and apparatus 1 is configured to feed articles 3, in particular labeled articles 3 to the second handling machine.

Axis A preferably extends vertically and the path P is arc-shaped and extends horizontally.

Articles 3 can be rotated as they are advanced along the path P by carrousel 4 and as labels 2 are applied to the articles 3 themselves.

Apparatus 1 further comprises:
- a transfer device 7 configured to transfer a succession of labels 2 from a receiving station 8 to a label application station 9, at which labels 2 are applied onto respective receptacles 3, along a label path Q tangential to path P at label application station 9 itself;
- a feeding unit 10 for feeding a web 11 of labeling material to receiving station 8;
- a cutting unit 12 of known type, arranged adjacent to receiving station 8 for cutting off the succession of labels 2 from web 11; and
- a glue application unit 13 arranged adjacent to at least a portion of transfer device 7 and between receiving and label application stations 8 and 9 and configured to apply, at a glue application station 14, a given amount of glue on the back side of each label 2 advancing along the path Q prior to reaching label application station 9.

Advantageously, apparatus 1 also comprises a support assembly 15 carrying transfer device 7, feeding unit 10, cutting unit 12 and glue application unit 13.

More specifically, feeding unit 10 comprises a magazine (not shown and known as such) comprising at least a main and an auxiliary bobbin, each one carrying a web of labeling material. In use, web 11 is feed from the main bobbin until exhaustion of web 11 carried by the main bobbin and prior to exhaustion of web 11 carried by the main bobbin a splicing process (known as such and not further described) is activated so as to continuously feed web 11 from unit 10 to unit 12. In particular, after exhaustion of web 11 carried by the main bobbin, web 11 is fed from the auxiliary bobbin. Even more particularly, during the splicing process a beginning portion of web 11 carried by the auxiliary bobbin is conjoined with an end portion of web 11 carried by the main bobbin.

More specifically, cutting unit 12 comprises:
- a rotary cutting drum 17, having an axis B parallel to axis A, arranged adjacent to at least a portion of transfer device 7 and carrying, on its outer lateral surface, the web 11; and
- a stationary cutter blade or cutter 18 carried in a fixed position on one side of rotary cutting drum 17 and proximal to receiving station 8 so as to cooperate, in use, with the rotary cutting drum 17 to cut one label 2 at a time from web 11. In particular, cutting unit 12 is adapted to cut labels 2 of given lengths, each having a leading edge 2a and a trailing edge 2b.

With particular reference to Figures 1 to 3, glue application unit 13 comprises a glue application roller 19 having an axis C substantially parallel to axes A and B.

In particular, glue application roller 19 is arranged adjacent to station 14 and is configured to rotate about its axis C. Advantageously, roller 19 has an outer cylindrical lateral surface 20, which, in use, is covered by melted glue continuously fed by a glue feeding system 21 (only partially shown to the extent necessary for the comprehension of the present invention and known as such) of glue application unit 13.

Glue application roller 19 is adapted to spread a pattern of glue at station 14 onto the backside of each label 2 advancing along path Q. In particular, the pattern is provided on the side of the label 2 destined to be stuck to the surface of one respective article 3 (i.e. glue is applied on the backside of label 2).

With reference to Figures 1 to 3, transfer device 7 comprises a transfer drum 25 rotatable around a central axis D, in particular axis D being parallel to axes A, B and C. Drum 25 is adapted to retain labels 2 on its outer lateral surface 26 during advancement of labels 2 along path Q. Even more particular, in use, during the labeling process transfer drum 25 rotates at a nominal working speed for attaching labels 2 to articles 3. In use, the nominal working speed is preferably set so as to allow for a labeling of about 500 to 1000 articles per minute.

More specifically, transfer drum 25 is arranged peripherally adjacent, preferably tangential, to glue application unit 13, in particular glue application roller 19 at glue application station 14. Even more specifically, transfer drum 25 is also arranged peripherally adjacent, preferably tangential, to rotary cutting drum 17 at receiving station 8, and to carousel 4 at label application station 9. Rotation of transfer drum 25 around axis D defines path Q of labels 2, which in particular follows an arc-shaped profile. More particularly, transfer drum 25 is configured to retain labels 2 on its outer lateral surface 26 and to advance these labels 2 from receiving station 8 to label application station 9 through glue application station 14 along path Q.

Furthermore, transfer drum 25 comprises a plurality of label retaining segments 27, in the specific example shown in Figures 1 to 3 three, each one adapted to receive at least one respective label 2 at receiving station 8 and to retain the respective label 2 during advancement of label 2, in particular to retain label 2 from station 8 to station 9 through station 14 along path Q. In particular, label retaining segments 27 at least partially define outer lateral surface 26. Preferably, segments 27 are mounted along a peripheral portion of transfer drum 25. Even more preferably, segments 27 are equally spaced angularly around axis D of transfer drum 25.

Each segment 27 comprises:
- a retaining section 29 adapted to retain labels 2 during advancement of labels 2 along at least a portion of path Q; and
- a transition section 30 adapted to permit labels 2, in particular being fed from unit 12 to transfer drum 25, to slide along transition section 30 itself, prior to being retained by the retaining section 29; in particular, each transition section 30 extends between two respective retaining sections 29.

Preferably, each segment 27, in particular the respective retaining section 29, comprises a pair of pad assemblies 31 adapted to interact with labels 2; i.e. in the particular example shown transfer drum 25 comprises six pad assemblies 31. In particular, each pair of pad assemblies 31 of each segment 27 delimits the respective retaining section 29.

In particular, pad assemblies 31 are mounted along the peripheral portion of transfer drum 25 and protrude away from axis D.

Even more particular, each pad assembly 31 is adapted to interact with a respective leading edge 2a or a respective trailing edge 2b of one respective label 2 for retaining the respective label 2 during advancement of labels 2 along path Q; i.e. one pad assembly 31 of each pair of pad assemblies 31 is configured to interact with leading edge 2a of the respective label 2 and the other one with the respective trailing edge 2b, in particular so that glue is applied to labels 2 only in the proximity of the respective edges 2a and 2b.

Favorably, each segment 27, in particular the respective sections 29 and 30 comprises a plurality of suction holes 32 configured to selectively communicating with a suction source (known as such and not shown) for allowing for slidingly guide and for retaining labels 2 during advancement along path Q by means of suction in a manner known as such and not further explained.

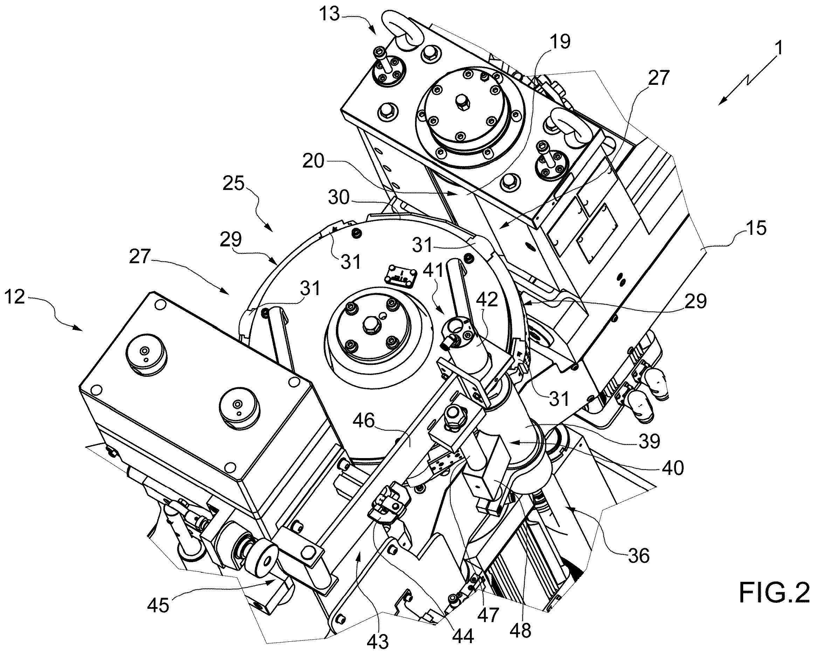

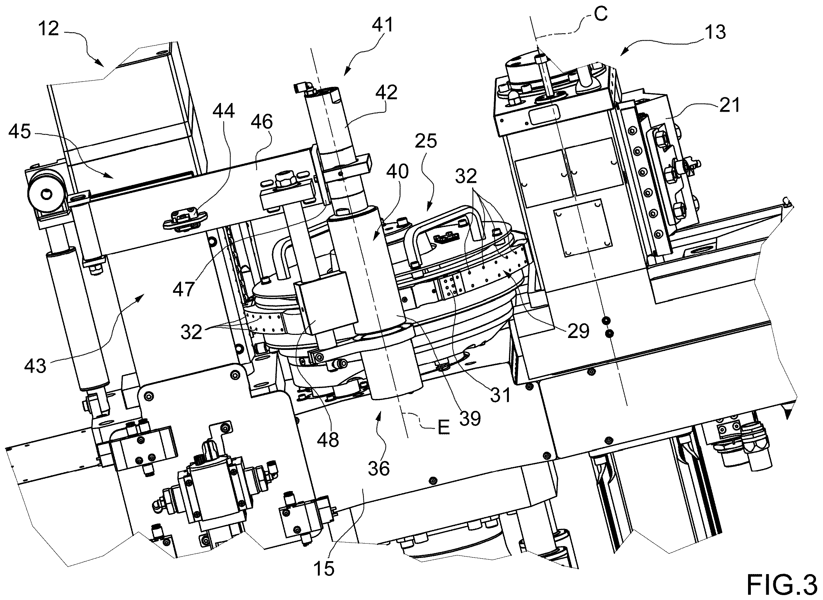

With particular reference to Figures 2 and 3, apparatus 1 further comprises:
- a cleaning unit 36 adapted to clean transfer drum 25, in particular surface 26 and arranged peripherally adjacent to transfer drum 25 at a cleaning station 37, in particular station 37 being interposed between station 8 and station 14; and
- a control unit 38 adapted to control cleaning unit 36 into an operative configuration at which cleaning unit 36 is adapted to clean transfer drum 25 and a rest configuration at which the cleaning function of cleaning unit 36 is at least interrupted or turned off.

Preferably, control unit 38 is also configured to control units 10, 12 and 13 and carousel 4.

Furthermore, control unit 38 is adapted to selectively activate cleaning unit 36 into at least any one of:
- a partial cleaning configuration at which cleaning unit 36 is configured to partially clean segments 27; and
- a full cleaning configuration at which cleaning unit 36 is configured to fully clean segments 27.

In particular, control unit 38 is configured to set cleaning unit 36 in the operative configuration by activating the partial or full cleaning configuration.

Control unit 38 itself is configured to be set, in particular by an operator, even more particular by means of a human-machine-interface (not shown and known as such) at least into an automatic mode at which control unit 38 is configured to activate cleaning unit 36 into the partial or the full cleaning configuration as a function of the operational status of apparatus 1 or a manual mode at which the control unit 38 is configured to activate cleaning unit 36 into the partial or the full cleaning configuration as a function of a specific, in particular manually activated trigger signal, in particular activated by an operator, even more particular activated by the operator by means of the human-machine-interface. In an alternative embodiment, control unit 38 could be configured to activate cleaning unit 36 only into the partial cleaning configuration or only into the full cleaning configuration as a function of a trigger signal with control unit 38 being set into the manual mode.

In particular, in the automatic mode control unit 38 is configured to analyze the operational status of apparatus 1. In use, the operational status of apparatus 1 varies in dependence of the function of the first handling machine and/or the second handling machine and/or of the function of components of apparatus 1 itself, in particular of feeding unit 10, cutting unit 12 and/or glue application unit 13.

In further detail, in the partial cleaning configuration cleaning unit 36 is configured to clean transition sections 30 , i.e. the partial cleaning of retaining segments 27 means that only sections 30 are cleaned; in other words sections 30 are cleaned and sections 29 are not cleaned. In the full cleaning configuration cleaning unit 38 is configured to clean retaining and transition sections 29 and 30. In particular, in use, in the full cleaning configuration also pad assemblies 31 are cleaned.

In particular, control unit 38 is adapted to control cleaning unit 36 into the full cleaning configuration in cases when feeding of labels 2 to transfer drum 25 is interrupted and, accordingly, segments 27 do not retain any labels 2. Preferably, control unit 38 is configured to control cleaning unit 36 into the partial cleaning configuration in cases where labels 2 are retained by segments 27, in particular retaining sections 29.

Advantageously, control unit 38 is further adapted to control the rotational speed of transfer drum 25. In particular, control unit 38 is adapted to control a reduction of the rotational speed of transfer drum 25 with respect to the nominal working speed when activating the partial or full cleaning configuration, in particular for improving the quality and reliability of the partial or full cleaning of segments 27 with respect to an unvaried rotational speed. In particular, the reduction of the rotational speed facilitates a selectively cleaning of transition sections 30 and avoidance of any kind of interference with retaining sections 29 when control unit 38 controls, in use, cleaning unit 36 into the partial cleaning configuration. Preferably, control unit 38 is also adapted to control units 10, 12 and 13 and carousel 4 for adjusting operation of these to the altered rotation speed of drum 25; i.e. control unit 38 is configured to alter the overall labeling process.

Alternatively or additionally, control unit 38 is configured to activate the partial or full cleaning configuration when, in use, the rotational speed of transfer drum 25 is reduced with respect to the nominal working speed, in particular as a consequence of the operational status of apparatus 1.

Favorably, control unit 38 is configured to control the rotational speed to a cleaning speed, preferably the cleaning speed is such that apparatus 1 is adapted to label about 80 to 120 articles per minute or in the case no labels 2 are fed to transfer drum 25 the rotational speed corresponds to a speed at which about 80 to 120 articles per minute would be labeled. Alternatively or additionally, control unit 38 is adapted to activate the partial or full cleaning configuration if the rotational speed of transfer drum 25 is reduced to the cleaning speed.

Preferably, cleaning unit 36 comprises a cleaning roller 39 arranged peripherally adjacent to transfer drum 25 at station 37 and adapted to rotate around a rotation axis E, axis E being parallel to axis D. Advantageously, cleaning roller 39 is adapted to move between an operative position (see Figures 2 and 3) at which roller 39 is configured to clean at least partially segments 27 and at least one rest position (see Figure 1) at which roller 39 is disabled from cleaning segments 27. In particular, at the operative position roller 39 is adapted to establish mechanical contact with segments 27, in particular with retaining sections 29 and transition sections 30 and at the rest position roller 39 is detached from segments 27, in particular from retaining sections 29 and transition sections 30.

In particular, the operational configuration of cleaning unit 36 is defined by roller 39 being at its operative position and the rest configuration of cleaning unit 36 is defined by roller being at its rest position.

Preferably, cleaning roller 39 comprises a sponge-like outer surface 40 adapted to receive and absorb a cleaning agent. Alternatively, cleaning roller 39 could comprise a brush-like surface structure.

Favorably, cleaning unit 36 comprises a driving assembly 41 adapted to actuate rotation of cleaning roller around axis E.

In more detail, driving assembly 41 comprises an electrical motor 42 coupled to roller 39 and adapted to drive roller 39. In particular, motor 42 is configured to rotate roller 39 in such a manner that the surface speed of surface 40 is lower than the surface speed of surface 26.

Preferably, cleaning unit 36 further comprises an actuation assembly 43 adapted to move roller 39 between the operative position and the rest position. Furthermore, actuation assembly 43 is adapted to continuously move, i.e. to oscillate, roller 39 between the operational position and the rest position, in particular with cleaning unit 36 being controlled in its partial cleaning configuration. Favorably, control unit 38 is adapted to control assembly 43 so that assembly 43 moves roller 39 between the operative and the rest position.

In more detail, control unit 38 is configured to control actuation assembly 43 in such a manner so that actuation assembly 43 continuously moves roller 39 between the operative and the rest position when controlling cleaning unit 36 into the partial cleaning configuration. In particular, in use, when cleaning unit 36 is controlled in the partial cleaning configuration actuation assembly 43 is configured to move roller 39 into the operative position so as to contact transition section 30 and to move roller 39 into the rest position so as to avoid contact between roller 39 and retaining sections 29. In other words, in the partial cleaning configuration actuation assembly 43 is adapted to continuously move (to oscillate) roller 39 between the operative and the rest position so as to guarantee cleaning of transition sections 30 and to avoid interference with retaining sections 29; in other words the frequency of oscillation is controlled in such a manner to establish contact of roller 39 with transition sections 30 and to detach roller 39 from retaining sections 29.

Preferably, actuation assembly 43 comprises at least one actuation element 44, in the particular example shown one, configured to move between an extracted configuration (not shown) and a retracted configuration (shown in Figures 2 and 3) for setting roller 39 into the rest or operative position. In the particular example shown, actuation element 44 is designed so as to set the roller 39 into the operative position by being in the retracted configuration and to set the roller 39 into the rest configuration by being in the extracted configuration.

Preferably, actuation element 44 is a linear actuator, in particular being of the electrical type. Alternatively, actuation element 44 could also be of the pneumatic or hydraulic type.

Preferably, actuation assembly 43 also comprises a support structure 45 carrying roller 39 and, in particular also motor 42. Favorably, support structure 45 is coupled to cutting unit 12.

In more detail, support structure 45 comprises a main portion, in particular a support plate 46 hinged at a first end of support plate 46 and adapted to perform an angular movement and at least indirectly carrying at a second end of plate 46 opposite to the first end roller 39 and motor 42. In particular, support structure 45 also comprises a coupling structure 47 mounted to the second end of plate 46 and carrying roller 39 and motor 42.

Advantageously, actuation element 44 is configured to cooperate with plate 46 for moving roller 39 between its operative and its rest position. In particular, actuation element 44 is coupled to cutting unit 12 and to an intermediate portion of plate 46 and is adapted to actuate the angular movement of plate 46. In use, as roller 39 is indirectly carried by plate 46 through coupling structure 47 the angular movement of plate 46 leads to movement of roller 39, in particular for moving roller 39 between the operative and the rest position.

With particular reference to Figures 2 and 3, cleaning unit 36 further comprises a dispensing assembly 48 adapted to apply a cleaning agent onto roller 39, in particular onto surface 40.

Preferably, dispensing assembly 48 is arranged in the proximity of roller 39, in particular dispensing assembly 48 is carried by support structure 45, even more particularly by coupling structure 47.

In use, prior to or during operation of apparatus 1 an operator sets control unit 38 into the automatic or manual mode for defining whether cleaning of transfer drum 25 is to be activated by control unit 38 automatically, based on the operational status of apparatus 1 itself or based on a trigger signal actuated by the operator himself.

In the following we assume the case that the operator has set the control unit 38 into the automatic mode.

Overall, feeding unit 10 feeds web 11 to cutting unit 12 which cuts single labels 2 from web 11. Labels 2 are transferred at station 8 to transfer device 7. In particular, labels 2 are transferred to transfer drum 25 which rotates around axis D. Even more particularly, each label 2 is transferred at station 8 to one respective segment 27 so as to advance label 2 along path Q through stations 14 and 9. In further detail, each label 2 is transferred at station 8 to the respective transfer section 30 which slidingly guides label 2 to the respective retaining section 29.

Further on, a pattern of glue is applied to each label 2 advancing along path Q at station 14 and labels 2 are attached to articles 3 advancing along path P at station 9 in a manner known as such and further described.

During the overall labeling process control unit 38 selectively activates cleaning unit 36 into at least any one of:
- a partial cleaning configuration at which cleaning unit 36 partially cleans segments 27; and
- a full cleaning configuration at which cleaning unit 36 fully cleans segments 27.

In particular, control unit 38 monitors the operational status of apparatus 1 and activates cleaning unit 36 into the partial or the full cleaning configuration in dependence of the operational status.

Preferentially, control unit 38 controls cleaning unit 36 into the full cleaning configuration when the feeding of labels 2 to station 8 is interrupted. The typical operation of apparatus 1 foresees that a succession of articles 3 devoid of any gaps are fed to apparatus 1, in particular carrousel 4 so that this succession of articles 3 advances along path P. However, in practice, it occurs that gaps are present in the succession of articles 3 (the presence of gaps can be erroneous or gaps can be intrinsically present due to the specific operation of the first handling machine) or that the feeding of articles 3 must be interrupted, in particular due to possible problems of the first or the second handling machine. In these cases, in particular in the cases that the gap is sufficiently large, the operational status of apparatus 1 is altered, in particular the labeling process is interrupted as no articles 3 are delivered to carrousel 4. In particular, the feeding of labels 2 to transfer drum 25 at station 8 is interrupted in a manner known as such. Furthermore, the feeding of glue onto surface 20 of roller 19 is interrupted in a manner known as such and not further described.

In the full cleaning configuration control unit 38 controls roller 39 into the operative position so as to contact segments 27 and to fully clean segments 27, i.e. retaining and transition sections 29 and 30. Even more particular, control unit 38 controls actuation assembly 43 for moving the roller 39 from its rest position to its operative position. In even further detail, actuation element 44 is controlled from the extracted to the retracted configuration so as to move roller 39 from its rest position to its operative position.

Preferably, the rotational speed of transfer drum 25 is reduced with respect to the nominal working speed, in particular the speed equaling the cleaning speed.

Advantageously, rotation of roller 39 is actuated by activating driving assembly 41. In particular, dispensing assembly 48 applies the cleaning agent onto surface 40.

Advantageously, control unit 38 controls cleaning unit 36 into the partial cleaning configuration in case of an additional typical change in the operational status of apparatus 1, in particular due to the need to activate a splicing process within feeding unit 10. In particular, the splicing process is required to guarantee continuous feeding of web 11 to cutting unit 12. At some point off the overall labeling process an exhaustion of web 11 carried by the main bobbin occurs. Then during the splicing process the initial portion of web 11 carried by the auxiliary bobbin is to be conjoined with the final portions of web 11 carried by the main bobbin. During the splicing process the overall labeling process is preferably slowed down. I.e. preferably the feeding of labels 2 to transfer drum 25 is slowed down and concurrently the rotational speed of transfer drum 25 is reduced with respect to the nominal working speed, in particular the speed equaling the cleaning speed. During the splicing process labels 2 are still fed to station 8 so as during rotation of transfer drum 25 each segment 27 retains one respective label 2 during advancement of the respective label 2 from station 8 to station 9. In this particular case, retaining section 29 retains one respective label 2 during advancement of label 2 from station 8 to station 9 through stations 37 and 14. As a consequence, retaining section 29 cannot be subjected to a cleaning at station 37. Thus, control unit 38 is configured to activate cleaning unit 36 into the partial cleaning configuration so that solely transition sections 30 are subjected to a cleaning, in particular these are devoid of any portion of labels 2 at station 37. Roller 39 continuously moves between the rest position and the operative position so as to clean solely transition sections 30; i.e. the frequency is controlled un sich a manner that roller 39 is positioned in the operative position so as to establish contact with the transition sections 30 and roller 39 is positioned in the rest position so as to avoid contact with retaining sections 29.

In particular, control unit 38 controls actuation assembly 43 so as that roller 39 continuously moves between the rest position and the operative position.

Even more particularly, actuation element 44 oscillates between the retracted and extracted configuration, in particular at a frequency which guarantees cleaning of transition sections 30 by roller 39 and which avoids contact of roller 39 with retaining sections 29.

Advantageously, rotation of roller 39 is actuated by activating driving assembly 41, in particular during the complete activation of the partial cleaning mode. Advantageously, dispensing assembly 48 applies the cleaning agent onto surface 40.

In the case that the operator has set the control unit 38 into the manual mode the control unit 38 activates the partial or full cleaning configuration only based on the specific, in particular manually activated trigger signal, even more particular being activated by the operator himself.

The choice of setting the control unit 38 into the manual mode is in particular needed in these cases in which the operation of the first handling machine inherently results in a plurality of successions of articles 3 being fed to the labeling apparatus 1 with the successions being divided by gaps of a defined size which would trigger the activation of the partial cleaning configuration or the activation of the full cleaning configuration with control unit 38 being set in the automatic mode. Thus, in these cases cleaning of transfer drum 25 would be activated more often than actually necessary, leading to increased consumption of cleaning agent.

In the manual mode the operator can trigger control unit 38 so as to activate the partial or the full cleaning configuration of cleaning unit 36 which substantially works as described above and which is not repeated for reasons of conciseness.

Advantageously, when activating the partial or full cleaning configuration control unit 38 controls a reduction of the rotational speed of transfer drum 25 with respect to the nominal working speed, in particular control unit 38 controls rotation of transfer drum 25 to the cleaning speed. Preferably, control unit 38 also controls units 10, 12 and 13 and carousel 4 so as to adapt the speed of feeding labels 2 to station 8, the gluing process and the speed of advancement of articles 3 along path P.

It must be further noted that the manual mode can be advantageously set so as that control unit 38 activates the partial or full cleaning configuration prior or after the overall labeling process. In these cases control unit 38 controls rotation of transfer drum 25.

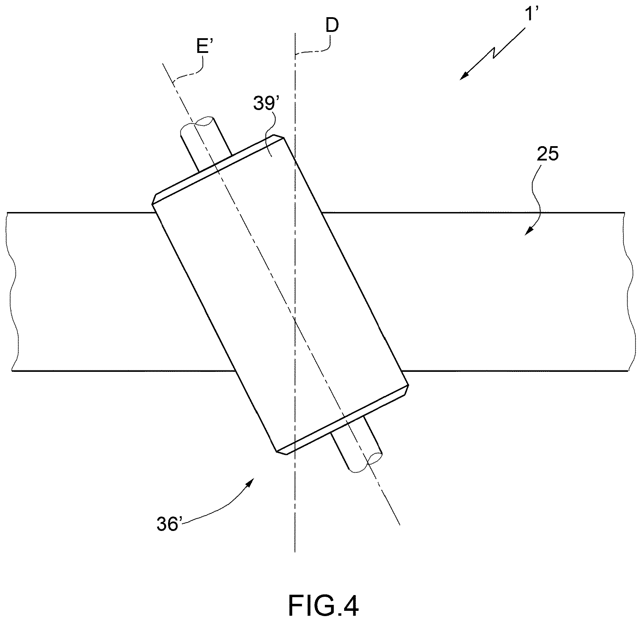

In Figure 4 number 1' indicates an alternative embodiment of a glue application apparatus (only partially shown to the extent necessary for the comprehension of the alternative embodiment) according to the present invention. As apparatus 1' is similar to apparatus 1, the following description is limited to the differences between them, and using the same references, where possible, for identical or corresponding parts.

In particular, apparatus 1' differs from apparatus 1 in comprising cleaning unit 36'.

As cleaning unit 36' is similar to cleaning unit 36 and the following description is limited to the differences between them, and using the same references, where possible, for identical or corresponding parts.

In particular, cleaning unit 36' differs from cleaning unit 36 in comprising cleaning roller 39' having a rotation axis E', axis E' being inclined with respect to axis D of transfer drum 25 (i.e. axis D and E deviate from being parallel), in particular being inclined in a tangential direction to surface 26. More specifically, axis D lies within a first plane and axis E' lies within a second plane distinct from and parallel to the first plane.

Preferably, in use, rotation of roller 39' is actuated passively through interaction with rotating transfer drum 25, in particular due to the contact friction between sponge-like outer surface 40' of roller 39' and surface 26, in particular when roller 39' is set at its operative position.

As the function of apparatus 1' is similar to apparatus 1 we refer to the description of the function of apparatus 1 and we solely refer to the differences between function of apparatuses 1 and 1'. In particular, the difference lies in roller 39' rotating around its axis E' due to interaction with transfer drum 25, in particular surface 26, in particular when being in its operative position.

The advantages of apparatus 1 and the operation of apparatus 1 according to the present invention will be clear from the foregoing description.

In particular, apparatus 1 provides for flexible means of cleaning transfer drum 25 significantly reducing downtimes due to a need of cleaning transfer drum 25. Apparatus 1 allows for cleaning of transfer drum 25 in dependence of the operational status of apparatus 1 itself, in particular performing the cleaning during the labeling process when this one allows so. Therefore, the overall labeling process does not or at least only needs to be rarely interrupted for cleaning drum 25.

It is further advantageous that cleaning unit 36 can be operated in a full cleaning configuration and a partial cleaning configuration. The partial cleaning configuration advantageously allows cleaning transition sections 30 which typically are more critical in terms of contamination as retaining sections 29.

A further advantage is that since during the overall labeling process regularly a splicing process needs to be activated, the partial cleaning configuration does not require any particular interruption or alteration of the labeling process itself, but solely uses the alteration itself.

An additional advantage is that the cleaning unit 36 is controlled into its full cleaning configuration when transfer drum 25 does not receive labels 2 at station 8. Thus, also in this case, no interruption of the labeling process needs to be done for the sole reason of cleaning transfer drum 25.

An even further advantage is that the cleaning unit 36 can be set into the automatic mode and the manual mode further increasing the flexibility of apparatus 1. Setting the control unit 38 into the manual mode allows to reduce the consumption of the cleaning agent, in particular in these situations at which control unit 38 would activate the partial or full cleaning configuration of the cleaning unit 36 more often than necessary.

Clearly, changes may be made to apparatus 1 and/or the method of operating apparatus 1 as described herein without, however, departing from the scope of protection as defined in the accompanying claims.

In an alternative embodiment not shown, cleaning unit 36 may comprise a laser device instead of cleaning roller 39, the laser device being adapted to clean transfer drum 25. In such an alternative embodiment, control unit 38 would turn on or off the laser device for setting the cleaning unit into an operative or rest configuration.

In an additional alternative embodiment not shown, control unit 38 would comprise an analyzing group adapted to determine the time lapsed since the last cleaning of transfer drum 25 and control unit 38 would be adapted to skip activation of the full or partial cleaning configuration in case the time lapsed is lower than a predetermined time limit.

In an even further embodiment, control unit 38 could be adapted to activate the partial or the full cleaning configuration of cleaning unit 36 if the time lapsed since the last cleaning of transfer drum 25 is superior than a predefined time limit. Control unit 38 would be adapted to control operation of units 10, 12 and 13 and carousel 4, accordingly.

In a further alternative embodiment not shown, actuation assembly 43 could be adapted to move roller 39 or roller 39' between the operative position, a main rest position and one or more intermediate rest positions interposed between the operative position and the main rest position. In such a further alternative embodiment, control unit 38 would preferably control the roller 39 or roller 39' between the intermediate rest position and the operative position when operating cleaning unit 36 in the partial cleaning configuration at which roller 39 or roller 39' performs an oscillating movement.

In an even other alternative embodiment not shown, cleaning unit 36' could comprise a driving assembly similar to driving assembly 41 for actively actuating rotation of roller 39'.

In a further alternative embodiment not shown, actuation assembly 43 could comprise cam means instead of actuation element 44, the cam means would be adapted to move roller 39 or 39' between the rest position and the operative position. Cam means would be designed to change between a first and a second configuration so as to be configured to be adapted to the partial and full cleaning configuration of cleaning unit 36 or 36'.

In another alternative embodiment not shown, the glue application unit 13 of labeling apparatus 1 may comprise a glue application nozzle or a plurality of glue application nozzles and a respective glue feeding system instead of roller 19 and glue feeding system 21. In particular, the glue application nozzle or the plurality of glue application nozzles could apply a pattern of glue onto labels 2 in a contact-free manner.

## Claims

1. A labeling apparatus (1) for labeling articles (3) comprising:
- a transfer drum (25) comprising at least one label retaining segment (27) adapted to receive and to retain at least one label (2) and the transfer drum (25) being adapted to convey the at least one label (2) along a path (Q) defined by rotation of the transfer drum (25) around a central axis (D) of the transfer drum (25) itself;
- a glue application unit (13) adapted to apply glue onto the label (2) at a glue application station (14) and, in particular the glue application unit (13) being arranged adjacent to the transfer drum (25) at the glue application station (14); and
- a cleaning unit (36) adapted to clean the transfer drum (25);
the labeling apparatus (1) further comprising a control unit (38) being adapted to selectively activate the cleaning unit (36) into at least any one of:
- a partial cleaning configuration at which the cleaning unit (36) is configured to partially clean the label retaining segment (27); and
- a full cleaning configuration at which the cleaning unit (36) is configured to fully clean the label retaining segment (27),
wherein the control unit (38) is configured to be set at least into an automatic mode, at which the control unit (38) is adapted to activate the cleaning unit (36) into the partial or the full cleaning configuration as a function of the operational status of the labeling apparatus (1), or a manual mode, at which the control unit (38) is adapted to activate the cleaning unit (36) into the partial or the full cleaning configuration as a function of a trigger signal, **characterized in that** the label retaining segment (27) comprises a retaining section (29) adapted to retain the label (2) and a transition section (30) adapted to receive the label (2) and to slidingly guide the label (2) to the retaining section (29); wherein in the partial cleaning configuration of the cleaning unit (36) the cleaning unit (36) is configured to clean only the transition section (30) and
wherein in the full cleaning configuration the cleaning unit (36) is configured to clean the retaining section (29) and the transition section (30).

2. The labeling apparatus according to claim 1, wherein the control unit (38) is further adapted to control a reduction of the rotational speed of the transfer drum (25) with respect to a nominal working speed of the transfer drum (25) when, in use, activating the cleaning unit (36) into the partial or the full cleaning configuration and/or the control unit (38) is adapted to activate the partial or full cleaning configuration when, in use, the rotational speed of the transfer drum (25) is reduced with respect to the nominal working speed.

3. The labeling apparatus according to any one of the preceding claims, wherein the cleaning unit comprises a cleaning roller (39, 39') adapted to rotate around a rotation axis (E, E') and to clean partially or fully the label retaining segment (27); the cleaning roller (39, 39') is further adapted to move between an operative position at which the cleaning roller (39, 39') is designed to clean at least partially the label retaining segment (27) and at least one rest position at which the cleaning roller (39, 39') is disabled from cleaning the label retaining segment (27).

4. The labeling apparatus according to claim 3, wherein the cleaning unit (36) comprises an actuation assembly (43) adapted to move the cleaning roller (39, 39') between the operative position and the rest position; wherein the control unit (38) for controlling the cleaning unit (36) into the partial cleaning configuration is adapted to control the actuation assembly (43) in such a manner so that the actuation assembly (43) continuously moves the cleaning roller between the operative position and the rest position.

5. The labeling apparatus according to claim 3 or 4, wherein the cleaning unit (36) comprises a driving assembly (41) adapted to actuate rotation of the cleaning roller (39, 39') around its rotation axis (E, E').

6. The labeling apparatus according to claim 3 or 4, wherein the rotation axis (E') of the cleaning roller (39') is inclined with respect to the central axis (D) of the transfer drum (25).

7. The labeling apparatus according to any one of claims 3 to 6, wherein the cleaning unit (36) comprises a dispensing assembly (48) adapted to apply a cleaning agent onto the cleaning roller (39, 39').

8. The labeling apparatus according to claim 7, wherein the cleaning roller (39, 39') comprises a sponge-like outer surface (40) adapted to absorb the cleaning agent applied by the dispensing assembly (48).

9. Method of operating a labeling apparatus (1), the labeling apparatus (1) comprising:
- a transfer drum (25) comprising at least one label retaining segment (27) adapted to receive and to retain at least one label (2) and the transfer drum (25) conveying the at least one label (2) along a path (Q) defined by rotation of the transfer drum (25) around a central axis (D) of the transfer drum (25) itself;
- a glue application unit (13) applying glue onto the label (2) at a glue application station (14), in particular the glue application unit (13) being arranged adjacent to the transfer drum (25) at the glue application station (14); and
- a cleaning unit (36) adapted to clean the transfer drum (25);
the method further comprising the step of a control unit (38) of the labeling apparatus (1) selectively activating the cleaning unit (36) into at least any one of:
- a partial cleaning configuration at which the cleaning unit (36) partially cleans the label retaining segment (27); and
- a full cleaning configuration at which the cleaning unit (36) fully cleans the label retaining segment (27), and wherein the control unit (38) is set at least into an automatic mode , at which the control unit (38) activates the cleaning unit (36) into the partial or the full cleaning configuration as a function of the operational status of the labeling apparatus (1), or a manual mode, at which the control unit (38) activates the cleaning unit (36) into the partial or the full cleaning configuration as a function of a trigger signal, and
the method being **characterized in that** the label retaining segment (27) comprises a retaining section (29) adapted to retain the label (2) and a transition section (30) adapted to receive the label (2) and to slidingly guide the label (2) to the retaining section (29);
wherein in the partial cleaning configuration of the cleaning unit (36), the cleaning unit (36) cleans only the transition section (30); and wherein in the full cleaning configuration the cleaning unit (36) cleans the retaining section (29) and the transition section (30).

10. The method according to claim 9, wherein the control unit (38) controls the transfer drum (25) to rotate at a reduced speed with respect to a nominal working speed when activating the cleaning unit (36) into the partial or the full cleaning configuration or the control unit (38) activates the partial or full cleaning configuration when the rotational speed of the transfer drum (25) is reduced with respect to the nominal working speed.

11. The method according to any one of claims 9 to 10, wherein the cleaning unit (36) comprises a cleaning roller (39, 39') adapted to clean the label retaining segment (27) ;
the method comprising the step of moving the cleaning roller (39, 39') into an operative position at which the cleaning roller (39, 39') cleans the label retaining segment (27) when activating the full cleaning configuration; or
the step of oscillating the cleaning roller (39, 39') between the operative position and at least one rest position at which the cleaning roller (39, 39') is detached from the label retaining segment (27) when activating the partial cleaning configuration.

12. The method according to claim 11 further comprising the step of actively actuating rotation of the cleaning roller (39) when activating the cleaning unit (36) into the partial or full cleaning configuration.

13. The method according to claim 11 or 12 further comprising the step of applying a cleaning agent onto the cleaning roller (39, 39').

## Patentansprüche

1. Etikettiervorrichtung (1) zum Etikettieren von Gegenständen (3), Folgendes umfassend:
- eine Transfertrommel (25), die mindestens ein Etikettenhaltesegment (27) umfasst, das dazu eingerichtet ist, mindestens ein Etikett (2) aufzunehmen und zu halten, und wobei die Transfertrommel (25) dazu eingerichtet ist, das mindestens eine Etikett (2) entlang eines Wegs (Q) zu befördern, der durch die Drehung der Transfertrommel (25) um eine mittige Achse (D) der Transfertrommel (25) selbst definiert ist;
- eine Klebstoffauftragungseinheit (13), die dazu eingerichtet ist, Klebstoff an einer Klebstoffauftragungsstation (14) auf das Etikett (2) auftragen, und wobei insbesondere die Klebstoffauftragungseinheit (13) an die Transfertrommel (25) angrenzend an der Klebstoffauftragungsstation (14) angeordnet ist; und
- eine Reinigungseinheit (36), die dazu eingerichtet ist, die Transfertrommel (25) zu reinigen;
wobei die Etikettiervorrichtung (1) ferner eine Steuereinheit (38) umfasst, die dazu eingerichtet ist, die Reinigungseinheit (36) selektiv in mindestens eine der folgenden Konfigurationen zu schalten:
- eine Teilreinigungskonfiguration, bei der die Reinigungseinheit (36) dazu ausgelegt ist, das Etikettenhaltesegment (27) teilweise zu reinigen; und
- eine Vollreinigungskonfiguration, bei der die Reinigungseinheit (36) dazu ausgelegt ist, das Etikettenhaltesegment (27) vollständig zu reinigen, wobei die Steuereinheit (38) dazu ausgelegt ist, zumindest in einen Automatikmodus eingestellt zu sein, in dem die Steuereinheit (38) dazu eingerichtet ist, die Reinigungseinheit (36) als Funktion des Betriebsstatus der Etikettiervorrichtung (1) in die Teil- oder Vollreinigungskonfiguration zu schalten,
oder in einen manuellen Modus, in dem die Steuereinheit (38) dazu eingerichtet ist, die Reinigungseinheit (36) als Funktion eines Auslösesignals in die Teil- oder Vollreinigungskonfiguration zu schalten,
**dadurch gekennzeichnet, dass** das Etikettenhaltesegment (27) einen Halteabschnitt (29), der dazu eingerichtet ist, das Etikett (2) zu halten, und einen Übergangsabschnitt (30), der dazu eingerichtet ist, das Etikett (2) aufzunehmen und das Etikett (2) gleitend in den Halteabschnitt (29) zu führen, umfasst; wobei die Reinigungseinheit (36) in der Teilreinigungskonfiguration der Reinigungseinheit (36) dazu ausgelegt ist, nur den Übergangsabschnitt (30) zu reinigen, und
wobei die Reinigungseinheit (36) in der Vollreinigungskonfiguration dazu ausgelegt ist, den Halteabschnitt (29) und den Übergangsabschnitt (30) zu reinigen.

2. Etikettiervorrichtung nach Anspruch 1, wobei die Steuereinheit (38) ferner dazu eingerichtet ist, eine Verringerung der Drehgeschwindigkeit der Transfertrommel (25) in Bezug zu einer Nennarbeitsgeschwindigkeit der Transfertrommel (25) zu steuern, wenn die Reinigungseinheit (36) während der Verwendung in die Teil- oder Vollreinigungskonfiguration geschaltet wird und/oder die Steuereinheit (38) dazu eingerichtet ist, in die Teil- oder Vollreinigungskonfiguration zu schalten, wenn während der Verwendung die Drehgeschwindigkeit der Transfertrommel (25) in Bezug zur Nennarbeitsgeschwindigkeit verringert wird.

3. Etikettiervorrichtung nach einem der vorstehenden Ansprüche, wobei die Reinigungseinheit eine Reinigungswalze (39, 39') umfasst, die dazu eingerichtet ist, sich um eine Drehachse (E, E') zu drehen und das Etikettenhaltesegment (27) teilweise oder vollständig zu reinigen; wobei die Reinigungswalze (39, 39') ferner dazu eingerichtet ist, sich zwischen einer Arbeitsstellung, in der die Reinigungswalze (39, 39') dazu ausgestaltet ist, das Etikettenhaltesegment (27) zumindest teilweise zu reinigen, und mindestens einer Ruhestellung, in der die Reinigungswalze (39, 39') daran gehindert wird, das Etikettenhaltesegment (27) zu reinigen, zu bewegen.

4. Etikettiervorrichtung nach Anspruch 3, wobei die Reinigungseinheit (36) eine Betätigungsanordnung (43) umfasst, die dazu eingerichtet ist, die Reinigungswalze (39, 39') zwischen der Betriebsstellung und der Ruhestellung zu bewegen; wobei die Steuereinheit (38) zum Steuern der Reinigungseinheit (36) in die Teilreinigungskonfiguration dazu eingerichtet ist, die Betätigungsanordnung (43) derart zu steuern, dass die Betätigungsanordnung (43) die Reinigungswalze durchgehend zwischen der Betriebsstellung und der Ruhestellung bewegt.

5. Etikettiervorrichtung nach Anspruch 3 oder 4, wobei die Reinigungseinheit (36) eine Antriebsanordnung (41) umfasst, die dazu eingerichtet ist, die Drehung der Reinigungswalze (39, 39') um ihre Drehachse (E, E') zu aktivieren.

6. Etikettiervorrichtung nach Anspruch 3 oder 4, wobei die Drehachse (E') der Reinigungswalze (39') in Bezug zur Mittelachse (D) der Transfertrommel (25) geneigt ist.

7. Etikettiervorrichtung nach einem der Ansprüche 3 bis 6, wobei die Reinigungseinheit (36) eine Abgabeanordnung (48) umfasst, die dazu eingerichtet ist, ein Reinigungsmittel auf die Reinigungswalze (39, 39') abzugeben.

8. Etikettiervorrichtung nach Anspruch 7, wobei die Reinigungswalze (39, 39') eine schwammartige Außenfläche (40) umfasst, die dazu eingerichtet ist, das von der Abgabeanordnung (48) abgegebene Reinigungsmittel zu absorbieren.

9. Verfahren zum Betrieb einer Etikettiervorrichtung (1), wobei die Etikettiervorrichtung (1) Folgendes umfasst:
- eine Transfertrommel (25), die mindestens ein Etikettenhaltesegment (27) umfasst, das dazu eingerichtet ist, mindestens ein Etikett (2) aufzunehmen und zu halten, und wobei die Transfertrommel (25) das mindestens eine Etikett (2) entlang eines Wegs (Q) befördert, der durch die Drehung der Transfertrommel (25) um eine mittige Achse (D) der Transfertrommel (25) selbst definiert ist;
- eine Klebstoffauftragungseinheit (13), die Klebstoff an einer Klebstoffauftragungsstation (14) auf das Etikett (2) aufträgt, wobei insbesondere die Klebstoffauftragungseinheit (13) an die Transfertrommel (25) angrenzend an der Klebstoffauftragungsstation (14) angeordnet ist; und
- eine Reinigungseinheit (36), die dazu eingerichtet ist, die Transfertrommel (25) zu reinigen;
wobei das Verfahren ferner den Schritt einer Steuereinheit (38) der Etikettiervorrichtung (1), die die Reinigungseinheit (36) selektiv in mindestens eine der folgenden Konfigurationen schaltet, umfasst:
- eine Teilreinigungskonfiguration, bei der die Reinigungseinheit (36) das Etikettenhaltesegment (27) teilweise reinigt; und
- eine Vollreinigungskonfiguration, bei der die Reinigungseinheit (36) das Etikettenhaltesegment (27) vollständig reinigt und wobei die Steuereinheit (38) mindestens in einen Automatikmodus geschaltet ist, in dem die Steuereinheit (38) die Reinigungseinheit (36) als Funktion des Betriebsstatus der Etikettiervorrichtung (1) in die Teil- oder Vollreinigungskonfiguration schaltet, oder in einen manuellen Modus, in dem die Steuereinheit (38) die Reinigungseinheit (36) als Funktion eines Auslösesignals in die Teil- oder Vollreinigungskonfiguration schaltet, und
wobei das Verfahren **dadurch gekennzeichnet ist, dass** das Etikettenhaltesegment (27) einen Halteabschnitt (29), der dazu eingerichtet ist, das Etikett (2) zu halten, und einen Übergangsabschnitt (30), der dazu eingerichtet ist, das Etikett (2) aufzunehmen und das Etikett (2) gleitend in den Halteabschnitt (29) zu führen, umfasst;
wobei die Reinigungseinheit (36) in der Teilreinigungskonfiguration der Reinigungseinheit (36) nur den Übergangsabschnitt (30) reinigt und wobei die Reinigungseinheit (36) in der Vollreinigungskonfiguration den Halteabschnitt (29) und den Übergangsabschnitt (30) reinigt.

10. Verfahren nach Anspruch 9, wobei die Steuereinheit (38) die Transfertrommel (25) steuert, sich in Bezug zu einer Nennarbeitsgeschwindigkeit mit einer verringerten Geschwindigkeit zu drehen, wenn die Reinigungseinheit (36) in die Teil- oder Vollreinigungskonfiguration geschaltet wird, oder die Steuereinheit (38) in die Teil- oder Vollreinigungskonfiguration schaltet, wenn die Drehgeschwindigkeit der Transfertrommel (25) in Bezug zur Nennarbeitsgeschwindigkeit verringert ist.

11. Verfahren nach einem der Ansprüche 9 bis 10, wobei die Reinigungseinheit (36) eine Reinigungswalze (39, 39') umfasst, die dazu eingerichtet ist, das Etikettenhaltesegment (27) zu reinigen;
wobei das Verfahren den Schritt des Bewegens der Reinigungswalze (39, 39') in eine Betriebsstellung, in der die Reinigungswalze (39, 39') das Etikettenhaltesegment (27) reinigt, wenn in die Vollreinigungskonfiguration geschaltet wird; oder
den Schritt des Drehens der Reinigungswalze (39, 39') zwischen der Betriebsstellung und mindestens einer Ruhestellung, in der die Reinigungswalze (39, 39') vom Etikettenhaltesegment (27) gelöst ist, wenn in die Teilreinigungskonfiguration geschaltet wird, umfasst.

12. Verfahren nach Anspruch 11, ferner den Schritt des aktiven Schaltens der Drehung der Reinigungswalze (39), wenn die Reinigungseinheit (36) in die Teil- oder Vollreinigungskonfiguration geschaltet wird, umfassend.

13. Verfahren nach Anspruch 11 oder 12, ferner den Schritt des Auftragens eines Reinigungsmittels auf die Reinigungswalze (39, 39') umfassend.

## Revendications

1. Appareil d'étiquetage (1) pour l'étiquetage d'articles (3) comprenant :
- un tambour de transfert (25) comprenant au moins un segment de retenue d'étiquette (27) apte à recevoir et à retenir au moins une étiquette (2) et le tambour de transfert (25) étant apte à acheminer l'au moins une étiquette (2) le long d'un parcours (Q) défini par la rotation du tambour de transfert (25) autour d'un axe médian (D) du tambour de transfert (25) lui-même ;
- une unité d'application de colle (13) apte à appliquer de la colle sur l'étiquette (2) au niveau d'un poste d'application de colle (14) et, en particulier, l'unité d'application de colle (13) étant disposée de manière adjacente au tambour de transfert (25) au niveau du poste d'application de colle (14) ; et
- une unité de nettoyage (36) apte à nettoyer le tambour de transfert (25) ;
l'appareil d'étiquetage (1) comprenant en outre une unité de commande (38) apte à activer de manière sélective l'unité de nettoyage (36) de sorte qu'elle adopte au moins l'une quelconque de :
- une configuration de nettoyage partiel dans laquelle l'unité de nettoyage (36) est conçue pour nettoyer partiellement le segment de retenue d'étiquette (27) ; et
- une configuration de nettoyage complet dans laquelle l'unité de nettoyage (36) est conçue pour nettoyer complètement le segment de retenue d'étiquette (27),
l'unité de commande (38) étant conçue pour être mise au moins en mode automatique, dans lequel l'unité de commande (38) est apte à activer l'unité de nettoyage (36) de sorte qu'elle adopte la configuration de nettoyage partiel ou complet en fonction de l'état de fonctionnement de l'appareil d'étiquetage (1), ou en mode manuel, dans lequel l'unité de commande (38) est apte à activer l'unité de nettoyage (36) de sorte qu'elle adopte la configuration de nettoyage partiel ou complet en fonction d'un signal de déclenchement, **caractérisé en ce que** le segment de retenue d'étiquette (27) comprend une section de retenue (29) apte à retenir l'étiquette (2) et une section de transition (30) apte à recevoir l'étiquette (2) et à guider l'étiquette (2) en glissement jusqu'à la section de retenue (29) ; l'unité de nettoyage (36) étant, dans la configuration de nettoyage partiel de l'unité de nettoyage (36), conçue pour nettoyer uniquement la section de transition (30) et l'unité de nettoyage (36) étant, dans la configuration de nettoyage complet, conçue pour nettoyer la section de retenue (29) et la section de transition (30).

2. Appareil d'étiquetage selon la revendication 1, dans lequel l'unité de commande (38) est apte en outre à commander une réduction de la vitesse de rotation du tambour de transfert (25) par rapport à une vitesse de travail nominale du tambour de transfert (25) lorsqu'elle active, pendant l'utilisation, l'unité de nettoyage (36) de sorte qu'elle adopte la configuration de nettoyage partiel ou complet et/ou l'unité de commande (38) est apte à activer la configuration de nettoyage partiel ou complet lorsque, pendant l'utilisation, la vitesse de rotation du tambour de transfert (25) est réduite par rapport à la vitesse de travail nominale.

3. Appareil d'étiquetage selon l'une quelconque des revendications précédentes, dans lequel l'unité de nettoyage comprend un rouleau de nettoyage (39, 39') apte à tourner autour d'un axe de rotation (E, E') et à nettoyer partiellement ou complètement le segment de retenue d'étiquette (27) ; le rouleau de nettoyage (39, 39') est apte en outre à se déplacer entre une position fonctionnelle dans laquelle le rouleau de nettoyage (39, 39') est conçu pour nettoyer au moins partiellement le segment de retenue d'étiquette (27) et au moins une position de repos dans laquelle le rouleau de nettoyage (39, 39') est incapable de nettoyer le segment de retenue d'étiquette (27).

4. Appareil d'étiquetage selon la revendication 3, dans lequel l'unité de nettoyage (36) comprend un ensemble d'actionnement (43) apte à déplacer le rouleau de nettoyage (39, 39') entre la position fonctionnelle et la position de repos ; dans lequel l'unité de commande (38), afin de commander l'unité de nettoyage (36) de sorte qu'elle adopte la configuration de nettoyage partiel, est apte à commander l'ensemble d'actionnement (43) de telle sorte que l'ensemble d'actionnement (43) déplace de façon continue le rouleau de nettoyage entre la position fonctionnelle et la position de repos.

5. Appareil d'étiquetage selon la revendication 3 ou 4, dans lequel l'unité de nettoyage (36) comprend un ensemble d'entraînement (41) apte à provoquer la rotation du rouleau de nettoyage (39, 39') autour de son axe de rotation (E, E').

6. Appareil d'étiquetage selon la revendication 3 ou 4, dans lequel l'axe de rotation (E') du rouleau de nettoyage (39') est incliné par rapport à l'axe médian (D) du rouleau de transfert (25).

7. Appareil d'étiquetage selon l'une quelconque des revendications 3 à 6, dans lequel l'unité de nettoyage (36) comprend un ensemble de distribution (48) apte à appliquer un agent de nettoyage sur le rouleau de nettoyage (39, 39').

8. Appareil d'étiquetage selon la revendication 7, dans lequel le rouleau de nettoyage (39, 39') comprend une surface extérieure (40) spongieuse apte à absorber l'agent de nettoyage appliqué par l'ensemble de distribution (48).

9. Procédé pour faire fonctionner un appareil d'étiquetage (1), l'appareil d'étiquetage (1) comprenant :
- un tambour de transfert (25) comprenant au moins un segment de retenue d'étiquette (27) apte à recevoir et à retenir au moins une étiquette (2) et le tambour de transfert (25) acheminant l'au moins une étiquette (2) le long d'un parcours (Q) défini par la rotation du tambour de transfert (25) autour d'un axe médian (D) du tambour de transfert (25) lui-même ;
- une unité d'application de colle (13) appliquant de la colle sur l'étiquette (2) au niveau d'un poste d'application de colle (14) et, en particulier, l'unité d'application de colle (13) étant disposée de manière adjacente au tambour de transfert (25) au niveau du poste d'application de colle (14) ; et
- une unité de nettoyage (36) apte à nettoyer le tambour de transfert (25) ;
le procédé comprenant en outre l'étape au cours de laquelle une unité de commande (38) de l'appareil d'étiquetage (1) active de manière sélective l'unité de nettoyage (36) de sorte qu'elle adopte au moins l'une quelconque de :
- une configuration de nettoyage partiel dans laquelle l'unité de nettoyage (36) nettoie partiellement le segment de retenue d'étiquette (27) ; et
- une configuration de nettoyage complet dans laquelle l'unité de nettoyage (36) nettoie complètement le segment de retenue d'étiquette (27),
et l'unité de commande (38) étant mise au moins en mode automatique, dans lequel l'unité de commande (38) active l'unité de nettoyage (36) de sorte qu'elle adopte la configuration de nettoyage partiel ou complet en fonction de l'état de fonctionnement de l'appareil d'étiquetage (1), ou en mode manuel, dans lequel l'unité de commande (38) active l'unité de nettoyage (36) de sorte qu'elle adopte la configuration de nettoyage partiel ou complet en fonction d'un signal de déclenchement, et
le procédé étant **caractérisé en ce que** le segment de retenue d'étiquette (27) comprend une section de retenue (29) apte à retenir l'étiquette (2) et une section de transition (30) apte à recevoir l'étiquette (2) et à guider l'étiquette (2) en glissement jusqu'à la section de retenue (29) ;
l'unité de nettoyage (36) nettoyant, dans la configuration de nettoyage partiel de l'unité de nettoyage (36), uniquement la section de transition (30) ; et l'unité de nettoyage (36) nettoyant, dans la configuration de nettoyage complet, la section de retenue (29) et la section de transition (30).

10. Procédé selon la revendication 9, dans lequel l'unité de commande (38) commande le tambour de transfert (25) de sorte qu'il tourne à une vitesse réduite par rapport à une vitesse de travail nominale lorsqu'elle active l'unité de nettoyage (36) de sorte qu'elle adopte la configuration de nettoyage partiel ou complet ou l'unité de commande (38) active la configuration de nettoyage partiel ou complet lorsque la vitesse de rotation du tambour de transfert (25) est réduite par rapport à la vitesse de travail nominale.

11. Procédé selon l'une quelconque des revendications 9 et 10, dans lequel l'unité de nettoyage (36) comprend un rouleau de nettoyage (39, 39') apte à nettoyer le segment de retenue d'étiquette (27) ;
le procédé comprenant l'étape consistant à déplacer le rouleau de nettoyage (39, 39') de sorte qu'il adopte une position fonctionnelle dans laquelle le rouleau de nettoyage (39, 39') nettoie le segment de retenue d'étiquette (27) lorsque la configuration de nettoyage complet est activée ; ou
l'étape consistant à faire osciller le rouleau de nettoyage (39, 39') entre la position fonctionnelle et au moins une position de repos dans laquelle le rouleau de nettoyage (39, 39') est séparé du segment de retenue d'étiquette (27) lorsque la configuration de nettoyage partiel est activée.

12. Procédé selon la revendication 11, comprenant en outre l'étape consistant à provoquer activement la rotation du rouleau de nettoyage (39) lorsque l'unité de nettoyage (36) est activée de sorte qu'elle adopte la configuration de nettoyage partiel ou complet.

13. Procédé selon la revendication 11 ou 12, comprenant en outre l'étape consistant à appliquer un agent de nettoyage sur le rouleau de nettoyage (39, 39').
